# EUROPÄISCHE PATENTSCHRIFT

(11) **EP 2 436 504 B1**
(45) Veröffentlichungstag und Bekanntmachung des Hinweises auf die Patenterteilung: **01.07.2015**
(21) Anmeldenummer: 11167062.6
(22) Anmeldetag: 23.05.2011
(51) Int. Cl.: B29C 49/00, B29C 49/38, B29D 23/18, F16L 9/18

(54) **Verfahren zur fortlaufenden Herstellung eines Verbundrohres mit Rohrmuffe, Verbundrohr mit Rohrmuffe und Vorrichtung zur Durchführung des Verfahrens und zur Herstellung des Verbundrohres**
Method for continuous manufacture of a connecting tube with rod fitting, connecting tube with rod fitting and device for executing the method and manufacturing the connecting tube
Procédé de fabrication continue d'un tube d'assemblage doté d'un manchon tubulaire, tube d'assemblage doté d'un manchon tubulaire et dispositif d'exécution du procédé et de fabrication du tube d'assemblage

(30) Priorität: 29.09.2010 DE 102010041602
(43) Veröffentlichungstag der Anmeldung: 04.04.2012
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Schneck & Hübner Patentanwälte Rechtsanwälte PartGmbB

(56) Entgegenhaltungen:
- EP-A1- 1 612 030
- EP-A2- 0 563 575
- WO-A1-88/05377
- WO-A1-2009/103310

## Beschreibung

Die Erfindung betrifft ein Verfahren nach Anspruch 1, ein Verbundrohr nach Anspruch 6 und eine Vorrichtung nach Anspruch 8.

Aus der EP 1 612 030 A1, der WO 2009/103 310 A1 und der EP 0 563 575 A2 sind ein Verfahren nach dem Oberbegriff des Anspruchs 1, ein Verbundrohr nach dem Oberbegriff des Anspruchs 6 und eine Vorrichtung nach dem Oberbegriff des Anspruchs 8 bekannt. Insbesondere bei Nennweiten DN ≤ 300 hat sich in der Praxis gezeigt, dass eine blasenfreie, also fehlstellenfreie Verbindung von Innen-Schlauch und Außen-Schlauch im Bereich des Übergangs vom gewellten Rohr zur Rohrmuffe nicht immer gewährleistet ist.

Aus der WO 88/05 377 ist eine ähnliche Ausgestaltung bekannt, wobei der Übergangs-Abschnitt nicht schräg nach außen, sondern radial nach außen ausgebildet ist; eine feste Anlage des Innenschlauches an den Außen-schlauch im Bereich dieses Übergangsabschnitts ist ohnehin hierbei nicht möglich.

Der Erfindung liegt daher die Aufgabe zugrunde, das gattungsgemäße Verfahren, das gattungsgemäße Verbundrohr und die gattungsgemäße Vorrichtung so weiterzubilden, dass eine blasenfreie Verbindung zwischen Innen-Schlauch und Außen-Schlauch auch im Bereich des Übergangs vom gewellten Rohr zur Rohr-Muffe erreicht wird.

Diese Aufgabe wird erfindungsgemäß durch die Merkmale im Kennzeichnungsteil des Anspruches 1 für ein Verfahren, im Kennzeichnungsteil des Anspruches 6 für ein Verbundrohr und im Kennzeichnungsteil des Anspruches 8 für eine Vorrichtung jeweils der gattungsgemäßen Art gelöst.

Der Erfindung liegt die Erkenntnis zugrunde, dass bei den erwähnten niedrigeren Nennweiten aufgrund der üblicherweise höheren Produktionsge-schwindigkeiten als bei größeren Nennweiten sich im Innenraum des Innen-Schlauches nicht schnell genug ein ausreichend hoher Druck aufbaut, der den Innen-Schlauch ausreichend fest gegen den Außen-Schlauch andrückt. Als Ursache hierfür wurde erkannt, dass bei der Druckbeaufschlagung des Innen-Schlauches von innen bei Beginn des Aufweitens zur Rohrmuffe der Druck in Förderrichtung zwischen Kalibrierdorn und Innen-Schlauch entweicht. Dies führt einerseits zu Einbeulungen des Innen-Schlauches in diesem Übergangsbereich und andererseits zu den geschilderten Mängeln der Rohrmuffe. Durch die relative Verlängerung des der Rohrmuffe unmittelbar voreilenden ersten Wellentals gegenüber den übrigen Wellentälern wird eine ausreichende Abdichtung zwischen dem Innen-Schlauch und dem Kalibrierdorn sichergestellt, so dass sich der zur Aufweitung des Innen-Schlauches in dem erwähnten Übergangsbereich notwendige Druck schnell genug aufbauen kann, so dass sich der Innen-Schlauch vollflächig gegen den hier bereits aufgeweiteten Außen-Schlauch anlegen kann.

Weitere vorteilhafte Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine im Wesentlichen aus zwei Extrudern, einer Formmaschine und einer Nachkühlvorrichtung bestehende Anlage zur Herstellung von Verbundrohren mit RohrMuffen in Draufsicht in schematischer Darstellung,
- Fig. 2: einen Spritzkopf und das Einlaufende der Formmaschine im Horizontalschnitt,
- Fig. 3: einen vertikalen Teil-Längsschnitt durch die Formmaschine während der Herstellung eines normalen Verbundrohres,
- Fig. 4: den vertikalen Teil-Längsschnitt gemäß Fig. 3 in einer Position zu Beginn der Herstellung einer RohrMuffe,
- Fig. 5: den vertikalen Teil-Längsschnitt gemäß Fig. 3 und 4 in einer Position während der Herstellung einer RohrMuffe,
- Fig. 6: einen vergrößerten Teil-Ausschnitt gemäß der Linie VI in Fig. 5,
- Fig. 7: den vertikalen Teil-Längsschnitt entsprechend Fig. 3, 4 und 5 in einer Position am Ende der Herstellung der Rohr-Muffe,
- Fig. 8: ein auf der Anlage hergestelltes Verbundrohr mit Rohr-Muffe,
- Fig. 9: einen Querschnitt durch das Verbundrohr gemäß der Schnittlinie IX-IX in Fig. 8,
- Fig. 10: einen Teil-Längsschnitt durch das Verbundrohr entsprechend der Schnittlinie X-X in Fig. 9 und
- Fig. 11: einen Teil-Längsschnitt durch das Verbundrohr gemäß der Schnittlinie XI-XI in Fig. 9.

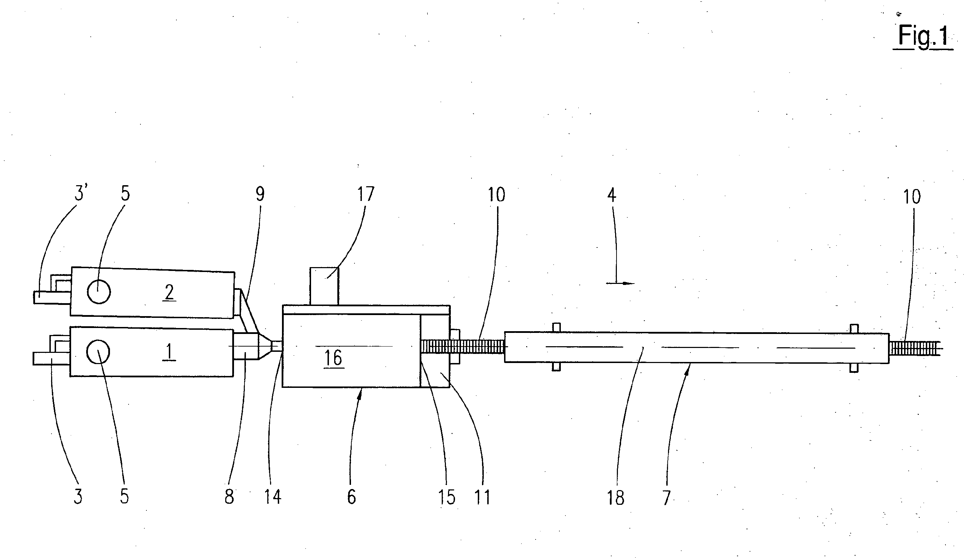

Die in Fig. 1 dargestellte Anlage zur Herstellung von Verbundrohren weist zwei Extruder 1, 2 auf. Diese werden jeweils von einem drehzahlregelbaren Antriebsmotor 3 bzw. 3' angetrieben, der - bezogen auf eine Förderrichtung 4 der gesamten Anlage - stromaufwärts vor den Zuführtrichtern 5 der Extruder 1, 2 vorgesehen ist.

Bezogen auf die Förderrichtung 4 stromabwärts von den Extrudern 1, 2 ist eine Formmaschine 6, ein sogenannter Korrugator, angeordnet, dem wiederum eine Nachkühlvorrichtung 7 nachgeordnet ist. An einem fluchtend mit der Formmaschine 6 und der Nachkühlvorrichtung 7 angeordneten Extruder 1 ist ein Quer-Spritzkopf 8 angebracht, der in die Formmaschine 6 hineinragt. Der andere, seitlich dieses Extruders 1 angeordnete Extruder 2 ist über einen seitlich in den Quer-Spritzkopf 8 einmündenden Spritzkanal 9 mit dem Quer-Spritzkopf 8 verbunden. Wie schematisch in Fig. 1 angedeutet ist, wird in der Formmaschine 6 ein Verbundrohr 10 geformt, das in Förderrichtung 4 aus der Formmaschine 6 austritt und in der Nachkühlvorrichtung 7 abgekühlt wird. Hinter dieser Nachkühlvorrichtung 7 kann es dann in Stücke geeigneter Länge zerschnitten werden.

Die Formmaschine 6 ist in ihrem Aufbau bekannt und in der Praxis üblich. Sie ist beispielsweise in der EP 0 563 575 B1 (entsprechend US-PS 5,320,797) beschrieben, worauf ausdrücklich verwiesen wird. Sie weist im Wesentlichen einen Maschinentisch 11 auf, auf dem Halbkokillen 12, 12' angeordnet sind, die jeweils zu zwei sogenannten Ketten 13, 13' miteinander verbunden sind. Diese Ketten 13, 13' werden am - bezogen auf die Förderrichtung 4 - stromaufwärtigen Einlaufende 14 und an ihrem stromabwärtigen Auslaufende 15 über nicht dargestellte Umlenkrollen geführt. Sie werden bei dem Umlauf in Förderrichtung 4 derart geführt, dass jeweils zwei Halbkokillen 12, 12' zu einem Kokillen-Paar vereinigt werden, wobei wiederum in Förderrichtung 4 hintereinanderfolgende Kokillen-Paare dicht an dicht liegen. Der Antrieb der auf einer Formstrecke 16 jeweils zu Kokillen-Paaren zusammengeführten Halbkokillen 12, 12' erfolgt mittels eines Antriebsmotors 17.

Der Quer-Spritzkopf 8 weist zwei konzentrisch zu einer gemeinsamen Mittel-Längs-Achse 18 angeordnete Schmelzekanäle, nämlich einen inneren Schmelzekanal 19 und einen äußeren Schmelzekanal 20, auf, die - bezogen auf die Förderrichtung 4 - stromabwärts in einer Innen-Düse 21 bzw. einer Außen-Düse 22 enden. Der innere Schmelzekanal 19 ist an einen Spritzkanal 23 des fluchtend mit der Formmaschine 6 angeordneten Extruders 1 angeschlossen, wogegen der äußere Schmelzekanal 20 an den Spritzkanal 9 des anderen Extruders 2 angeschlossen ist. Zwischen der Innen-Düse 21 und der Außen-Düse 22 mündet aus dem Spritzkopf 8 ein Gaskanal 24, der über ein Ventil an eine Druckgasquelle zum Einblasen von sogenannter Stützluft und an Atmosphäre anschließbar ist.

Am - bezogen auf die Förderrichtung 4 - stromabwärtigen Ende des Spritzkopfes 8 ist an diesem ein Kalibrierdorn 25 angebracht, der ebenfalls konzentrisch zur Achse 18 verläuft. Er weist Kühlkanäle 26 auf, durch die Kühlwasser geführt wird, das über eine Kühlwasser-Vorlaufleitung 27 zugeführt und eine Kühlwasser-Rücklaufleitung 28 abgeführt wird. Weiterhin ist eine Luftleitung 29 vorgesehen, die an einen als zusätzlicher Gaskanal dienenden Gasspalt 30 angeschlossen ist, der sich - bezogen auf die Förderrichtung 4 - unmittelbar stromabwärts der Innen-Düse 21 zwischen dem Spritzkopf 8 und dem Kalibrierdorn 25 befindet. Die Leitungen 27, 28, 29 sind durch einen konzentrisch zur Achse 18 im Spritzkopf 8 ausgebildeten, etwa rohrförmigen Versorgungskanal 31 geführt.

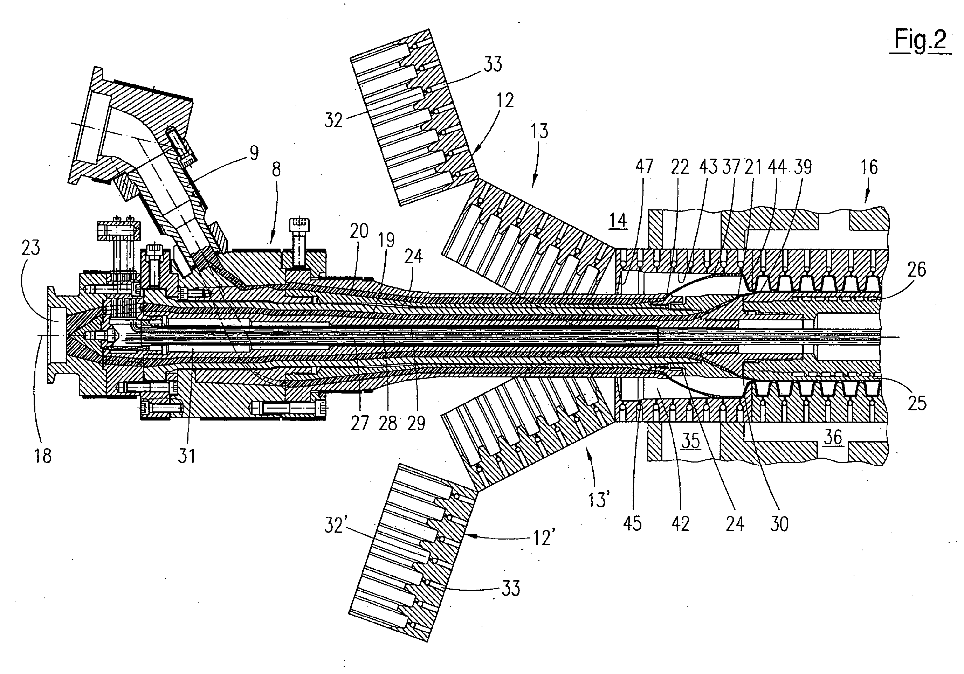

Die Halbkokillen 12, 12' weisen ringförmige Formausnehmungen 32, 32' auf, die in regelmäßigen Abständen hintereinander angeordnet sind und die jeweils an Teil-Vakuum-Kanäle 33 angeschlossen sind. Beim Einlauf der Halbkokillen 12, 12' in die Formstrecke 16 gelangen die Teil-Vakuum-Kanäle 33 - wie Fig. 2 entnehmbar ist - an Teil-Vakuum-Versorgungsquellen 35 bzw. 36, so dass die Formausnehmungen 32 mit Teil-Vakuum beaufschlagt werden.

Die vom Extruder 2 durch den Spritzkanal 9 dem Spritzkopf 8 zugeführte Kunststoff-Schmelze strömt durch den äußeren Schmelzekanal 20 zur Außen-Düse 22 und wird dort unter Formung eines Außen-Schlauchs 37 extrudiert. Aufgrund des Teil-Vakuums legt sich dieser Schlauch 37 unter Formung eines mit ringförmigen Wellenbergen 38 versehenen Schlauchs in die Formausnehmungen 32, 32'. Aus dem Extruder 1 wird durch den Spritzkanal 23 dem Quer-Spritzkopf 8 Kunststoff-Schmelze zugeführt und strömt durch den inneren Schmelzekanal 19 zur Innen-Düse 21 und tritt dort als Innen-Schlauch 39 aus, der auf den Kalibrier-Dorn 25 gelangt. Dieser erweitert sich von der Innen-Düse 21 in Förderrichtung 4 leicht nach außen, bis der Innen-Schlauch 39 gegen die Wellentäler 40 des Außen-Schlauchs 37 gelangt und hier mit diesem verschweißt wird. Der Innen-Schlauch 39 und der Außen-Schlauch 37 bilden nach Abkühlung unter Erstarrung das Verbundrohr 10.

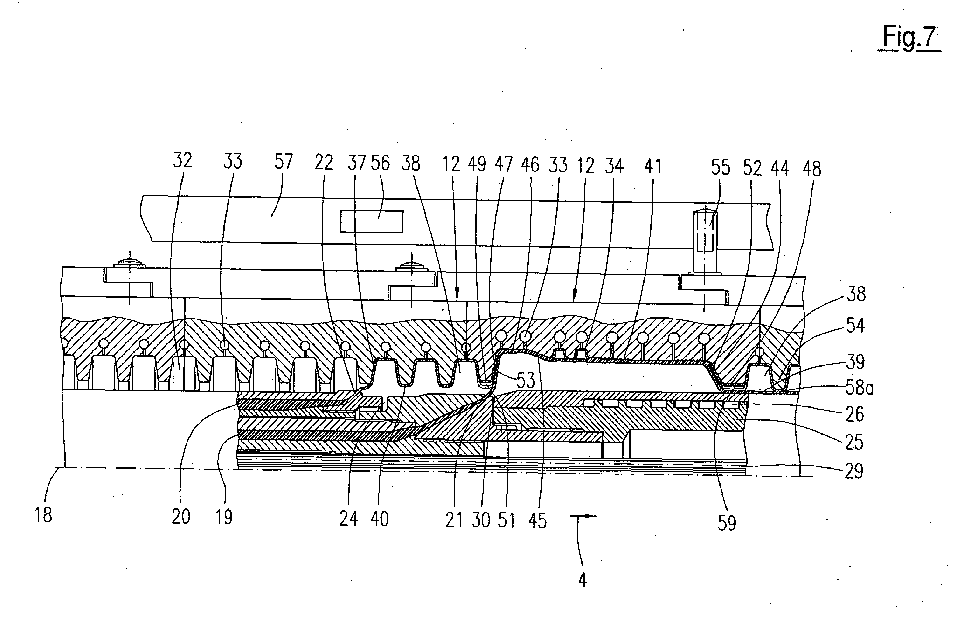

Wie insbesondere aus den Figuren 2, 3, 4, 5 und 7 ersichtlich ist, sind die Halbkokillen 12, 12' so ausgebildet, dass jeweils in vorgegebenen Abständen innerhalb des endlos hergestellten Verbundrohres 10 Rohr-Muffen 41 ausgebildet werden. Hierzu ist in einem Paar von Halbkokillen 12, 12' eine Muffen-Ausnehmung 42 ausgebildet, die also eine im Wesentlichen glatte, zylindrische Wand 43 aufweist. Zwischen der Wand 43 der Muffen-Ausnehmung 42 und der in Förderrichtung 4 voreilenden Formausnehmung 32 ist eine sich schräg nach außen erweiternde, also kegelstumpfförmige Übergangs-Fläche 44 ausgebildet. An das - in Förderrichtung 4 - nacheilende Ende der Wand 43 der Muffen-Ausnehmung 42 schließen sich Umfangsrillen 34 zur Versteifung der Rohr-Muffe 41 und ein kegelstumpfförmiger Formabschnitt 45 an, in dem ein sich nach außen erweiterndes Einführende 46 der Muffe 41 ausgeformt wird. Daran schließt sich wiederum eine Übergangs-Fläche 47 an, die zur nächsten - in Förderrichtung 4 nacheilenden - Formausnehmung 32 führt.

Soweit die Vorrichtung bis hierher beschrieben ist, ist sie im Wesentlichen aus EP 0 995 579 A2 (entsprechend US 6,458,311) bekannt, worauf ausdrücklich verwiesen wird.

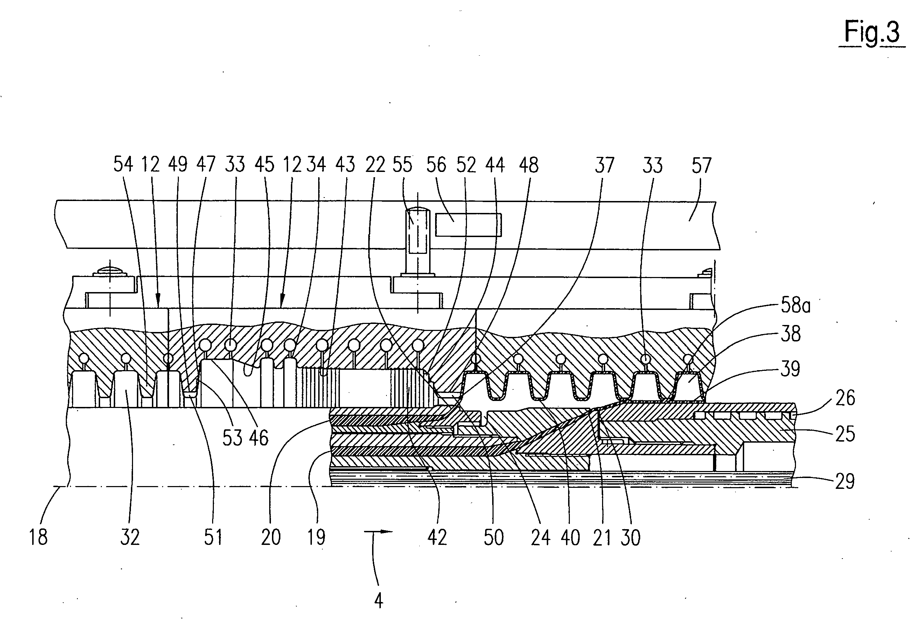

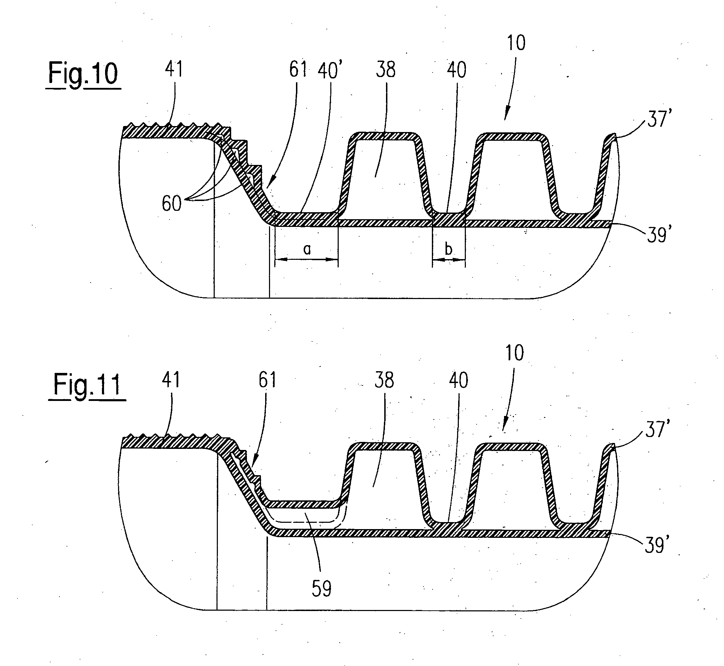

Wie aus Fig. 3 bis 7 hervorgeht, sind an der - in Förderrichtung 4 voreilenden - Übergangs-Fläche 44 und an der - in Förderrichtung 4 nacheilenden - Übergangs-Fläche 47 im Bereich des zu erzeugenden Wellentals 40 des Außen-Schlauchs 37 an dem die jeweilige Übergangs-Fläche 44 bzw. 47 formenden Ringsteg 48 bzw. 49 der Halbkokille 12, 12' in Richtung der Achse 18 verlaufende schlitzförmige Ausnehmungen 50, 51 ausgebildet. Diese Ausnehmungen 50, 51 verbinden also die jeweilige Übergangs-Fläche 44 bzw. 47 mit dem nächstbenachbarten ringförmigen Wellenberg 38. Die Ausnehmungen 50, 51 jedes Ringstegs 48, 49 sind mittels sich über den Umfang der jeweiligen Übergangs-Fläche 44 bzw. 47 erstreckenden und in letzteren ausgebildeten Verbindungsnuten 52, 53 miteinander verbunden. Wie den Fig. 3 bis 10 entnehmbar ist, hat der in Förderrichtung 4 der Übergangs-Fläche 44 unmittelbar voreilende Ringsteg 48 im Bereich des zu erzeugenden Wellentals 40' eine größere Breite a als die entsprechende Breite b der übrigen, die Wellenberge 38 und die Wellentäler 40 des Außen-Schlauchs 37 formenden Ringstege 54. Es gilt: a ≥ 1,5 b

Wie aus den Fig. 3, 4, 5, 7 hervorgeht, erstreckt sich die die Muffen-Ausnehmung 42 aufnehmende Halbkokille 12 über eine solche Länge, dass die Ringstege 48, 49 vollständig in ihr enthalten sind. Die Trennung benachbarter Halbkokillen 12 geht also abweichend von der insoweit nur schematischen Darstellung in Fig. 2 nicht durch den Ringsteg 48 bzw. 49. Dies hat fertigungstechnische Vorteile. Wenn die Muffen-Ausnehmung 42 so lang ist, dass sie sich über mehr als eine Halbkokille 12 erstreckt, dann gilt dies entsprechend für diese Halbkokillen 12.

In einer räumlich festen Zuordnung zu der Muffen-Ausnehmung 42 ist ein stabförmiges Schaltglied 55 mit der entsprechenden Halbkokille 12 verbunden, das einen Schalter 56 betätigt, mittels dessen die Drehzahl und damit die Extrudiergeschwindigkeit der Extruder 1, 2 verändert wird, und mittels dessen der Gaskanal 24 bzw. der Gasspalt 30 versorgt werden. Hierzu ist an der Formmaschine 6 ein Haltearm 57 angebracht, der sich oberhalb der Halbkokillen 12, 12' in Förderrichtung 4 erstreckt. An diesem Haltearm 57 ist der von dem Schaltglied 55 zu betätigende Schalter 56 angebracht. Dieser Schalter 56 wird - wie aus Fig. 3, 4, 5 und 7 hervorgeht - betätigt. Die Veränderung der Drehzahl des Extruders 2, der die Kunststoff-Schmelze zur Herstellung des Außen-Schlauches 37 liefert, die Ansteuerung der sogenannten Stützluft, die aus dem Gaskanal 24 strömt, die Ansteuerung des Gasspaltes 30 am Kalibrierdorn 25 und schließlich die Änderung der Drehzahl und damit der Extrudiergeschwindigkeit des Extruders 1, der die Kunststoff-Schmelze zur Erzeugung des Innen-Schlauches 39 liefert, erfolgen über die Software einer Steuerung, für die der Schalter 56 bei Betätigung ein Referenzsignal liefert.

Während der Produktion des normalen gewellten Verbundrohres 10 in der in Fig. 3 rechts dargestellten Form wird der Außen-Schlauch 37 aufgrund des Teil-Vakuums von 0,3 bis 0,9 bar bezogen auf Atmosphärendruck in die Formausnehmungen 32 gezogen und liegt an diesen an. Hierbei wird ein geringer Überdruck von 0,05 bis 0,15 bar über Atmosphärendruck auf den Gasspalt 30 gegeben. Gleichzeitig wird auf den Gaskanal 24 ein ebenfalls geringer, aber höherer Überdruck von 0,15 bis 0,45 bar, ebenfalls gegenüber Atmosphäre gemessen, gegeben. Durch den geringen Überdruck innerhalb des Innen-Schlauches 39 wird verhindert, dass der Innen-Schlauch 39 an dem Kalibrierdorn 25 festklebt, bevor er mit dem Außen-Schlauch 37 verschweißt wird. Anstelle des Überdrucks kann auch ein Teil-Vakuum auf den Gasspalt 30 gegeben werden. Durch den etwas höheren Überdruck zwischen Außen-Schlauch 37 und Innen-Schlauch 39 wird sichergestellt, dass beim Abkühlen der an den Wellentälern 40 miteinander verschweißten Schläuche 37, 39 zum gewellten Verbundrohr 10 der Innen-Schlauch 39 nicht radial nach außen in den Wellenberg 38 hinein ausgewölbt wird. Beim Abkühlen der Schläuche 37, 39 stellt sich zwischen diesen etwa Atmosphärendruck ein. Während dieser Herstellung des normalen gewellten Verbundrohres 10 laufen die Extruder 1, 2 mit einer vorgegebenen Drehzahl, d. h. sie extrudieren jeweils einen konstanten Massestrom an Kunststoff-Schmelze pro Zeiteinheit. Je nach den Eigenschaften der Kunststoff-Schmelze, aus der der Innen-Schlauch 39 besteht, kann ein Teil-Vakuum am Kalibrierdorn 25 dazu dienen, eine glatte Innenfläche des Innen-Schlauches 39 und damit des späteren Innen-Rohres 39' zu erhalten. Es handelt sich hierbei dann um die sogenannte Vakuumkalibrierung.

Wenn zu dem in Fig. 3 bzw. kurz nach dem in Fig. 3 dargestellten Augenblick die Übergangs-Fläche 44 in den Bereich der Außen-Düse 22 kommt, gelangt das Schaltglied 55 zum Schalter 56, durch dessen Betätigung der Antriebsmotor 3' des Extruders 2 in seiner Drehzahl herabgesetzt wird, so dass die Extrudiergeschwindigkeit, d. h. der Massestrom an Kunststoff-Schmelze pro Zeiteinheit, reduziert wird. Durch die Reduktion der Drehzahl des Extruders 2 wird bewirkt, dass der sich aufgrund des Teil-Vakuums an die Übergangs-Fläche 44 und die Wand 43 der Muffen-Ausnehmung 42 anlegende Außen-Schlauch 37 pro Längeneinheit des Verbundrohres 10 weniger Kunststoff enthält als in dem Bereich des normalen gewellten Verbundrohres 10, in dem aus ihm ein Außenrohr 37' mit Wellenbergen 38 geformt wird. Je nach dem Grad der Reduktion der Drehzahl kann die Wanddicke im Bereich der Rohr-Muffe 41 gleich der im Bereich der Wellenberge 38 des Verbundrohres 10 sein; sie kann aber auch größer oder kleiner sein. Eine entsprechende Anpassung bzw. Veränderung der Wanddicke im Bereich der Rohr-Muffe 41 kann ebenfalls in bekannter Weise durch Erhöhung der Geschwindigkeit der die Formstrecke 16 bildenden Halbkokillen 12, 12' erreicht werden. Andererseits kann auch über eine Erhöhung der Drehzahl des Extruders 2 bzw. eine Reduktion der Geschwindigkeit der Formstrecke eine Vergrößerung der Wanddicke im Bereich der Rohr-Muffe 41 erreicht werden.

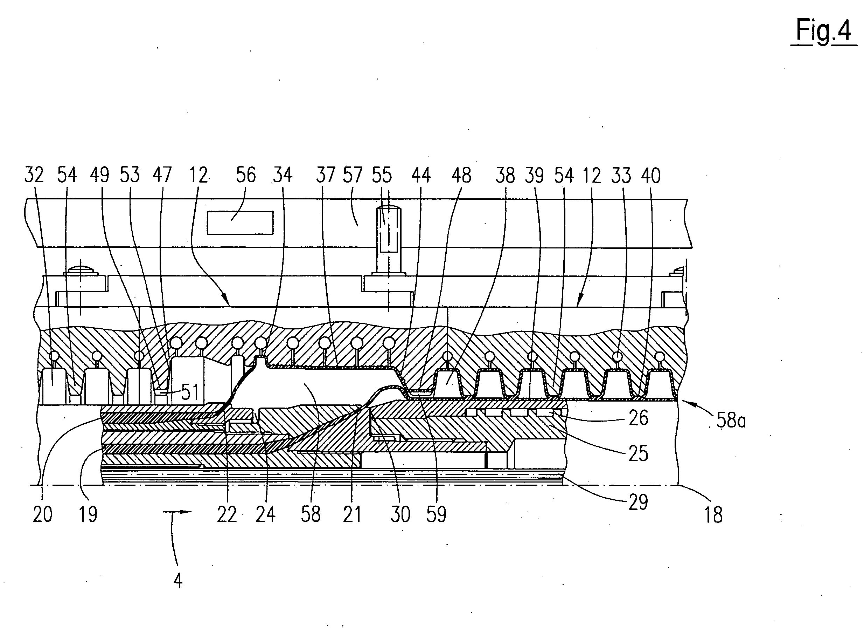

Wenn - kurz vor dem in Fig. 4 dargestellten Augenblick - die Übergangs-Fläche 44 die Innen-Düse 21 erreicht, wird der Überdruck der aus dem Gasspalt 30 austretenden Luft z. B. auf einen Überdruck von ca. 0,2 bis 0,45 bar erhöht. Wenn die so genannte Vakuumkalibrierung ausgeführt wird, dann wird ein niedrigerer Überdruck der aus dem Gasspalt 30 austretenden Luft, z. B. von 0, 1 bis 0, 3 bar eingestellt. Gleichzeitig wird der Überdruck von dem Gaskanal 24 genommen und der Zwischenraum 58 zwischen Innen-Schlauch 39 und Außen-Schlauch 37 im Bereich der Muffen-Ausnehmung 42 entlüftet. Der Innen-Schlauch 39 wird nach außen gegen den Außen-Schlauch 37 gedrückt.

Wenn der Überdruck in den Innen-Schlauch 39 gegeben wird, ist im Bereich des Ringstegs 48 der Innen-Schlauch 39 zumindest schon teilweise gegen den Außen-Schlauch 37 angedrückt. Durch die Verquetschung der Kunststoff-Schmelze von Außen-Schlauch 37 und Innen-Schlauch 39 in diesem Bereich über die Breite a des Ringstegs 48 wird eine ausreichend gute Abdichtung zwischen dem Innen-Schlauch 39 und dem Kalibrierdorn 25 erreicht. Die mit Überdruck in den Innen-Schlauch 39 eingeblasene Luft kann also nicht in den Bereich zwischen Innen-Schlauch 39 und Kalibrierdorn 25 entweichen und dort zu Einbeulungen des Innen-Schlauches 39 in die Wellenberge 38 führen. Da der Druck im Innen-Schlauch 39 nicht durch entweichende Luft reduziert wird, wird der Innen-Schlauch 39 ausreichend fest gegen den Außen-Schlauch 37 gedrückt, sodass zwischen diesen eine blasenfreie, also fehlstellenfreie Verbindung hergestellt wird. Damit die erwähnte Verquetschung der Kunststoff-Schmelze von Außen-Schlauch 37 und Innen-Schlauch 39 stattfindet, und damit auch generell der Innen-Schlauch 39 zuverlässig gegen die Wellentäler 40 des Außen-Schlauches 37 angedrückt wird, ist die Weite des Spaltes 58a zwischen den Ringstegen 48, 49 und 54 einerseits und dem Kalibrierdorn 25 andererseits höchstens gleich der Summe der Dicken der beiden Schläuche 37 und 39.

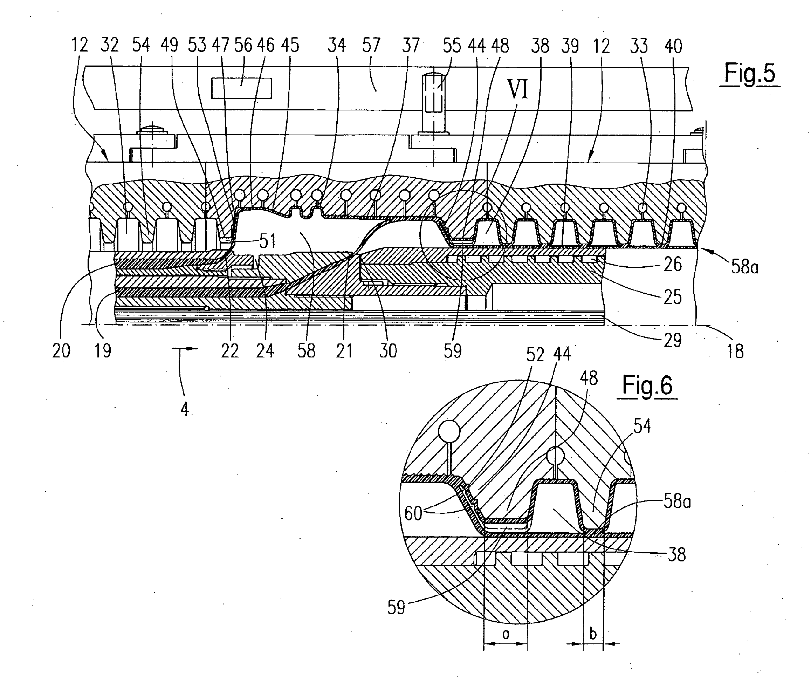

Wie Fig. 4 bis 6 entnehmbar ist, legt sich der Außen-Schlauch 37 gegen den Ringsteg 48 und die Übergangs-Fläche 44, wobei gleichzeitig im Bereich der schlitzförmigen Ausnehmungen 50 ein in den benachbarten Wellenberg 38 führender Überström-Kanal 59 zwischen den Schläuchen 37 und 39 geformt wird. An der Übergangs-Fläche 44 legt sich der Außen-Schlauch 37 auch in die Verbindungsnuten 52, wodurch Verbindungs-Kanäle 60 in dem zu formenden Außen-Rohr 37' gebildet werden. Der Innen-Schlauch 39 wird aufgrund des in ihm herrschenden Drucks zwar gegen den Außen-Schlauch 37 gedrückt, aber nicht in die Überström-Kanäle 59 bzw. die Verbindungs-Kanäle 60 eingedrückt bzw. eingeformt, so dass diese Kanäle 59, 60 zwischen dem Außen-Schlauch 37 und dem Innen-Schlauch 39 zumindest teilweise erhalten bleiben. Die in diesem Bereich befindliche Luft kann also in den in Förderrichtung voreilenden Wellenberg 38 abströmen. In dem Übergangs-Abschnitt 61 zwischen dem normalen Verbundrohr 10 und der in-line angeformten Rohr-Muffe 41 werden also der Außen-Schlauch 37 und der Innen-Schlauch 39 fast vollflächig miteinander verschweißt. Lediglich im Bereich der Überström-Kanäle 59 und der Verbindungs-Kanäle 60 ist diese Verschweißung nur teilweise gegeben. Diese Ausgestaltung ermöglicht es, den Übergangs-Abschnitt 61 - bezogen auf die Förderrichtung 4 - stark radial, also verhältnismäßig steil ansteigend, aber entgegen der Förderrichtung 4 sich kegelstumpfförmig erweiternd, also schräg nach außen verlaufend auszubilden. Wie sich weiterhin aus Fig. 4 und 5 ergibt, legt sich der Innen-Schlauch 39 im Übergangs-Abschnitt 61 gegen den bereits teilweise zur Rohr-Muffe 41 ausgeformten Außen-Schlauch 37.

Kurz bevor die Übergangs-Fläche 44 über die Innen-Düse 21 hinwegfährt, wird der Antriebsmotor 3 des Extruders 1 in der Weise angesteuert, dass beispielsweise seine Drehzahl erhöht wird, d. h. der pro Zeiteinheit extrudierte Massestrom an Kunststoff-Schmelze wird vergrößert. Der Innen-Schlauch 39 erhält also im Bereich der zu erzeugenden Muffe 41 pro Längeneinheit mehr Kunststoff-Schmelze als im Bereich des normalen gewellten Verbundrohres 10, in dem aus ihm nur das glattwandige Innenrohr 39' geformt wird.

Wenn die Übergangs-Fläche 47 der Muffen-Ausnehmung 42 die Außendüse 22 überfährt, wird die Extrusionsgeschwindigkeit des den Außen-Schlauch 37 liefernden Extruders 2 wieder auf die ursprüngliche Geschwindigkeit zurückgesetzt. Der Extruder 2 liefert also wieder die Menge Kunststoff-Schmelze pro Zeiteinheit, die zur Erzeugung der Wellenberge 38 erforderlich ist. Der Außen-Schlauch 37 legt sich gegen die Übergangs-Fläche 47 und in die in diesem ausgebildeten Verbindungsnuten 53, wodurch Verbindungs-Kanäle im Außen-Schlauch ausgebildet werden. Anschließend legt sich der Außen-Schlauch gegen den Ringsteg 49 und wird in den schlitzartigen Ausnehmungen 51 unter Bildung von Überströmkanälen ausgeformt, wie vorstehend bereits geschildert wurde.

Die Aufweitung des Außen-Schlauches 37 kann - wie geschildert - durch eine von innen nach außen wirkende Druckdifferenz erzeugt werden, die aufgrund eines Teil-Vakuums von außen und eines leichten Überdrucks über Atmosphärendruck bzw. Atmosphärendruck von innen entsteht. Alternativ kann über die Kanäle 33 lediglich eine Entlüftung nach außen erfolgen und die Verformung des Außen-Schlauches durch einen entsprechend höheren Innendruck gegen den dann von außen wirkenden Atmosphärendruck erfolgen. In diesem Fall würde eine sogenannte Verformung nach dem Blasverfahren erfolgen. Es kann auch eine Kombination von Vakuum-und Blasverfahren eingesetzt werden.

Wenn die Übergangs-Fläche 47 die Innen-Düse 21 erreicht, dann wird einerseits der Gasdruck am Gasspalt 30 wieder reduziert und der Gaskanal 24 mit Druckluft bzw. sogenannter Stützluft beaufschlagt, d. h. die verfahrenstechnischen Bedingungen werden wieder auf die Verhältnisse zurückgesetzt, die bei der Produktion des normalen Verbundrohres 10 bestehen. Wenn dann die Übergangs-Fläche 47 die Innen-Düse 21 überfahren hat, wird der Antriebsmotor 3 angesteuert und dadurch die Extrusionsgeschwindigkeit des Extruders 1 auf das ursprüngliche Maß zurückgenommen, so dass wieder die für die Erzeugung des glatten Innenrohres 39' erforderliche Menge an Kunststoff-Schmelze pro Zeiteinheit extrudiert wird. Wie bereits geschildert, legt sich der Innen-Schlauch 39 glatt gegen den Außen-Schlauch 37, wird aber nicht in die Verbindungs-Kanäle und die Überström-Kanäle hineingedrückt. Hierdurch wird die im Übergangs-Abschnitt 62 zwischen der Rohr-Muffe 41 und einem - bezogen auf die Förderrichtung 4 - nacheilenden normalen Verbundrohr 10 befindliche Luft in den nachfolgenden Wellenberg 38 abgeleitet.

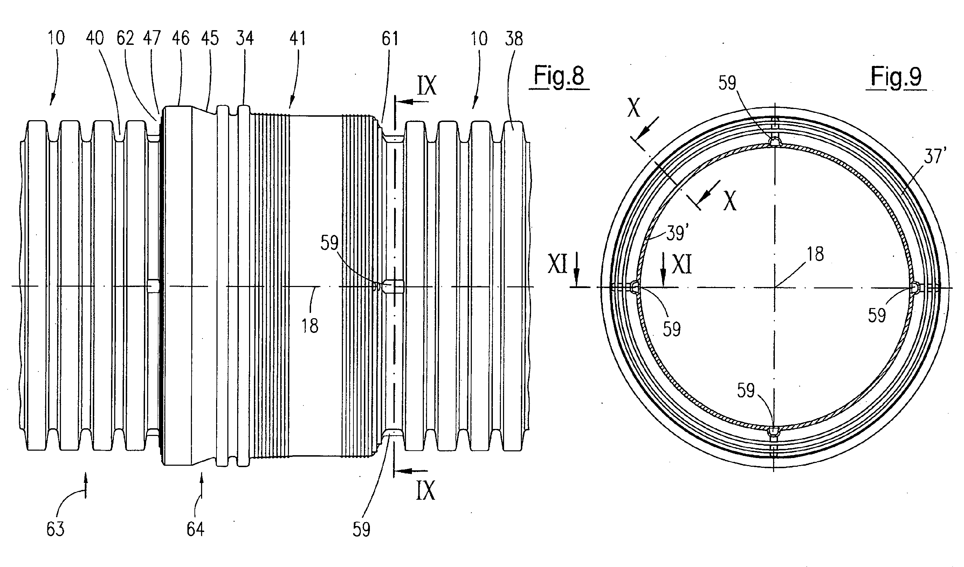

Das insbesondere in Fig. 8 dargestellte in-line endlos hergestellte Verbundrohr 10 wird im Bereich des in Förderrichtung 4 nacheilenden Übergangs-Abschnitts 62 durchtrennt, und zwar mit zwei Schnitten 63, 64, von denen der in Förderrichtung 4 nacheilende Schnitt 63 durch ein Wellental 40 hinter dem Übergangs-Abschnitt 62 geführt wird, während der in Förderrichtung 4 voreilende Schnitt 64 entlang dem Einführende 46 der Muffe 41 geführt wird.

Anstelle von zwei Extrudern 1, 2 und einem Quer-Spritzkopf 8 kann auch ein einziger Extruder eingesetzt werden und ein Spritzkopf, wie er beispielsweise aus der EP 0 509 216 B (entsprechend US-Patent 5,346,384) und der EP 0 834 386 B (entsprechend US-Patent 6,045,347) bekannt ist, worauf verwiesen wird.

## Patentansprüche

1. Verfahren zur fortlaufenden Herstellung eines aus einem glatten Innen-Rohr (39') und einem mit diesem verschweißten, mit Wellenbergen (38) versehenen Außen-Rohr (37') bestehenden Verbundrohres (10) mit einer Rohr-Muffe (41) und einer Mittel-Längs-Achse (18) mit folgenden Verfahrensschritten:
- es wird konzentrisch zur Mittel-Längs-Achse (18) ein warmplastischer Außen-Schlauch (37) aus Kunststoff in eine in einer Förderrichtung (4) wandernde Form aus paarweise aneinander und in Förderrichtung (4) dicht aneinander liegenden Halbkokillen (12, 12') extrudiert;
- der Außen-Schlauch (37) wird durch eine von innen nach außen wirkende Druckdifferenz in zwischen Ringstegen (48, 49, 54) ausgebildeten ringförmigen Formausnehmungen (32, 32') der Paare von Halbkokillen (12, 12') mit einer Wellung mit Wellenbergen (38) und Wellentälern (40, 40') versehen;
- bezogen auf die Förderrichtung (4) gegenüber dem Außen-Schlauch (37) nacheilend wird ein warmplastischer Innen-Schlauch (39) aus Kunststoff konzentrisch zur Mittel-Längs-Achse (18) in den Außen-Schlauch (37) und auf einen Kalibrierdorn (25) extrudiert;
- der Innen-Schlauch (39) wird mit den Wellentälern (40, 40') des Außen-Schlauches (37) in zwischen den Ringstegen (48, 49, 54) und dem Kalibrierdorn (25) gebildeten Spalten (58a) verschweißt;
- der Außen-Schlauch (37) wird in vorgegebenen Abständen unter Aufbringung einer von innen nach außen wirkenden Druckdifferenz zur Erzeugung einer Rohr-Muffe (41) aufgeweitet;
- der Innen-Schlauch (39) wird von innen mit Gas mit einem Druck über Atmosphärendruck beaufschlagt und zur Fertigstellung der Rohr-Muffe (41) unter Aufweitung vollflächig gegen den aufgeweiteten Bereich des Außen-Schlauches (37) gedrückt, und
- zwischen der Rohr-Muffe (41) und dem in Förderrichtung (4) voreilend nächst benachbarten Wellental (40') wird ein aus Innen-Schlauch (39) und Außen-Schlauch (37) geformter - bezogen auf die Mittel-Längs-Achse (18) - schräg nach außen gerichteter Übergangs-Abschnitt (61) ausgebildet, wobei bei Ausbildung des Übergangs-Abschnitts (61) der Innen-Schlauch (39) gegen den bereits aufgeweiteten Außen-Schlauch (37) angedrückt wird,
**dadurch gekennzeichnet,**
**dass** der Innen-Schlauch (39) und der Außen-Schlauch (37) in den Spalten (58a) gegeneinander gequetscht werden und
**dass** in den gequetschten Bereichen zwischen Innen-Schlauch (39) und Außen-Schlauch (37) die Breite a des in Förderrichtung (4) dem Übergangs-Abschnitt (61) nächst benachbarten ersten Wellentals (40') gröβer ausgebildet wird als die Breite b der dem ersten Wellental (40') in Förderrichtung (4) voreilenden zweiten Wellentäler (40).

2. Verfahren nach Anspruch 1, **dadurch gekennzeichnet,**
**dass** für die Breite a des ersten Wellentals (40') bezogen auf die Breite b der zweiten Wellentäler (40) gilt: a ≥ 1,5b.

3. Verfahren nach einem der Ansprüche 1 oder 2, **dadurch gekennzeichnet,**
**dass** der Innen-Schlauch (39) im Bereich der ersten Wellung (40') im Spalt (58a) abdichtend gegen den Kalibrierdorn (25) gedrückt wird.

4. Verfahren nach einem der Ansprüche 1 bis 3, **dadurch gekennzeichnet,**
**dass** der Übergangs-Abschnitt (61) im Bereich des ersten Wellentals (40') zwischen Innen-Schlauch (39) und Außen-Schlauch (37) in einen benachbarten Wellenberg (38) entlüftet wird.

5. Verfahren nach einem der Ansprüche 1 bis 4, **dadurch gekennzeichnet,**
**dass** zur Erzeugung einer von innen nach außen wirkenden Druckdifferenz ein Teil-Vakuum von außen auf den Außen-Schlauch (37) aufgebracht wird.

6. Verbundrohr, das nach dem Verfahren nach einem der Ansprüche 1 bis 5 hergestellt ist,
- mit einer Mittel-Längs-Achse (18),
- mit einem konzentrisch zur Mittel-Längs-Achse (18) verlaufenden glattwandigen Innen-Rohr (39'),
- mit einem gewellten Außen-Rohr (37'), das
-- Wellenberge (38) und
-- zwischen den Wellenbergen (38) Wellentäler (40, 40') auf weist, die mit dem Innen-Rohr (39') verschweißt sind,
- mit einer einstückig angeformten Rohr-Muffe (41),
- mit einem zwischen der Rohr-Muffe (41) und einem dieser unmittelbar benachbarten ersten Wellental (40') ausgebildeten, sich - bezogen auf die Mittel-Längs-Achse (18) - schräg nach außen erweiternden Übergangs-Abschnitt (61), der
-- zwischen Außen-Rohr (37') und Innen-Rohr (39') ausgebildet ist,
**dadurch gekennzeichnet,**
**dass** die Breite a des mit dem Innen-Rohr (39') verschweißten ersten Wellentals (40') größer ist als die Breite b der dem ersten Wellental (40') benachbarten Wellentäler (40).

7. Verbund-Rohr nach Anspruch 6, **dadurch gekennzeichnet,**
**dass** für die Breite a des ersten Wellentals (40') bezogen auf die Breite b der zweiten Wellentäler (40) gilt: a ≥ 1,5b.

8. Vorrichtung zur Durchführung des Verfahrens nach einem der Ansprüche 1 bis 5 und zur Herstellung eines Verbund-Rohres nach einem der Ansprüche 6 oder 7,
- wobei mit zwischen Ringstegen (48, 49, 54) ausgebildeten ringförmigen Formausnehmungen (32) versehene, sich auf einer Formstrecke (16) jeweils paarweise zu einer Form mit einer Mittel-Längs-Achse (18) ergänzende Halbkokillen (12, 12') im Kreislauf und in einer Förderrichtung (4) geführt angeordnet sind,
- wobei die Formausnehmungen (32) an in den Halbkokillen (12, 12') ausgebildete Kanäle (33) angeschlossen sind,
- wobei der Formstrecke (16) ein Spritzkopf (8) mindestens eines Extruders (1, 2) vorgeordnet ist,
- wobei der Spritzkopf (8) mit einer Außen-Düse (22) zur Extrusion eines Außen-Schlauches (37) und in Förderrichtung (4) nachgeordnet mit einer Innen-Düse (21) zur Extrusion eines Innen-Schlauches (39) und an seinem in Förderrichtung (4) hinten liegenden Ende mit einem Kalibrierdorn (25) versehen ist,
- wobei zwischen den Ringstegen (48, 49, 54) und dem Kalibrierdorn (25) jeweils ein Spalt (58a) zum Aneinanderquetschen des Außen-Schlauches (37) und des Innen-Schlauches (39) ausgebildet ist,
- wobei zwischen Außen-Düse (22) und Innen-Düse (21) aus dem Spritzkopf (8) mindestens ein Gaskanal (24) ausmündet,
- wobei zwischen Innen-Düse (21) und Kalibrierdorn (25) mindestens ein zusätzlicher Gas-Kanal (30) aus dem Spritzkopf (8) ausmündet,
- wobei mindestens ein Paar Halbkokillen (12, 12') mit einer Muf fen-Ausnehmung (42) versehen ist und
- wobei an dem zwischen der Muffen-Ausnehmung (42) und der in Förderrichtung (4) benachbarten Formausnehmung (32) befindlichen ersten Ringsteg (48) eine - bezogen auf die Mittel-Längs-Achse (18)- schräg nach außen gerichtete Übergangs-Fläche (44) ausgebildet ist,
**dadurch gekennzeichnet,**
**dass** die Breite a des einen Spalt (58a) begrenzenden ersten Ringstegs (48) größer ist als die Breite b der durch die in Förderrichtung (4) voreilenden Ringstege (54) begrenzten Spalte (58a).

9. Vorrichtung nach Anspruch 8, **dadurch gekennzeichnet,**
**dass** für die Breite a bezogen auf die Breite b gilt: a ≥ 1,5b.

10. Vorrichtung nach Anspruch 8 oder 9, **dadurch gekennzeichnet,**
**dass** in dem mindestens einen Ringsteg (48) eine die Übergangs-Fläche (44) mit der benachbarten ringförmigen Formausnehmung (32) verbindende Ausnehmung (50) vorgesehen ist.

11. Vorrichtung nach einem der Ansprüche 8 bis 10, **dadurch gekennzeichnet,**
**dass** die in den Halbkokillen (12, 12') ausgebildeten Kanäle als Teil-Vakuum-Kanäle (33) ausgebildet sind.

## Claims

1. Method for the continuous production of a composite pipe (10) consisting of a smooth internal pipe (39') and an external pipe (37'), provided with elevations (38), welded thereto, the composite pipe (10) comprising a pipe socket (41) and a central longitudinal axis (18), and the method comprising the following method steps:
- extruding, concentrically to the central longitudinal axis (18), a thermoplastic external tube (37) of plastic material into a mould moving in a direction of conveyance (4), the mould consisting of half shells (12, 12') abutting closely to each other in the direction of conveyance (4) such as to form a pair,
- providing the external tube (37) with a corrugation comprising elevations (38) and troughs (40, 40') in annular mould recesses (32, 32'), formed between annular webs (48, 49, 54), of the pairs of half shells (12, 12') as a result of a pressure difference acting from the inside to the outside;
- extruding, concentrically to the central longitudinal axis (18), a thermoplastic internal tube (39) of plastic material into the external tube (37) and onto a calibrating mandrel (25) in a direction downstream of the external tube (37) relative to the direction of conveyance (4);
- welding the internal tube (39) to the troughs (40, 40') of the external tube (37) in gaps (58a) formed between the annular webs (48, 49, 54) and the calibrating mandrel (25);
- widening the external tube (37) in predetermined distances by applying a pressure difference acting from the inside to the outside so as to produce a pipe socket (41);
- applying a gas having a pressure above atmospheric pressure to the internal tube (39) from inside and pressing the internal tube (39), which is being widened at the same time, against the widened portion of the external tube (37) such as to achieve a full surface-to-surface contact in order to complete the pipe socket (41), and
- forming, between the pipe socket (41) and the nearest trough arranged upstream thereof in the direction of conveyance (4), a transition portion (61) protruding in an obliquely outward direction relative to the central longitudinal axis (18), the transition portion (61) being formed of the internal tube (39) and the external tube (37), wherein during the formation of the transition portion (61), the internal tube (39) is pressed against the already widened external tube (37),
**characterized in**
**that** the internal tube (39) and the external tube (37) are squeezed against each other in the gaps (58a), and
**that** in the squeezed portions between the internal tube (39) and the external tube (37), the width a of the first trough (40') arranged closest to the transition portion (61) in the direction of conveyance (4) is made greater than the width b of the second troughs (40) arranged upstream of the first trough (40') in the direction of conveyance (4).

2. Method according to claim 1, **characterised in**
**that** to the width a of the first trough (40') relative to the width b of the second troughs (40) applies: a ≥ 1.5b.

3. Method according to one of claims 1 or 2, **characterised in**
**that** in the region of the first corrugation (40'), the internal tube (39) is pressed in the gap (58a) against the calibrating mandrel (25) in a sealing manner.

4. Method according to one of claims 1 to 3, **characterised in**
**that** in the region of the first trough (40') the transition portion (61) between the internal tube (39) and the external tube (37) is vented into an adjacent elevation (38).

5. Method according to one of claims 1 to 4, **characterised in**
**that** in order to generate a pressure difference acting from the inside to the outside, a partial vacuum is applied to the external tube (37) from outside.

6. Composite pipe produced according to a method according to one of claims 1 to 5, comprising
- a central longitudinal axis (18),
- a smooth internal pipe (39') extending concentrically to the central longitudinal axis (18),
- a corrugated external pipe (37') having
-- elevations (38) and
-- troughs (40, 40') between the elevations (38), the troughs (40, 40') being welded to the internal pipe (39'),
- a pipe socket (41) formed thereto in one piece,
- a transition portion (61) formed between the pipe socket (41) and a first trough (40') immediately adjacent thereto, the transition portion (61) widening in an obliquely outward direction relative to the central longitudinal axis (18), with the transition portion (61)
-- being formed between the external pipe (37') and the internal pipe (39'),
**characterised in**
**that** the width a of the first trough (40') welded to the internal pipe (39') is greater than the width b of the troughs (40) adjacent to the first trough (40').

7. Composite pipe according to claim 6, **characterized in that** to the width a of the first trough (40') relative to the width b of the second troughs (40) applies: a ≥ 1.5b.

8. Device for carrying out the method according to one of claims 1 to 5 and for producing a composite pipe according to one of claims 6 or 7,
- wherein half-shells (12, 12') provided with annular mould recesses (32) formed between annular webs (48, 49, 54) are arranged such as to be guided in a cycle and in a direction of conveyance (4), the half-shells (12, 12') combining in pairs to form a mould having a central longitudinal axis (18),
- wherein the mould recesses (32) are connected to ducts (33) formed in the half shells (12, 12'),
- wherein an extrusion head (8) of at least one extruder (1, 2) is arranged upstream of the moulding path (16),
- wherein the extrusion head (8) is provided with an external nozzle (22) for extrusion of an external tube (37), and with an internal nozzle (21) arranged downstream thereof in the direction of conveyance (4) for extrusion of an internal tube (39), and with a calibrating mandrel (25) arranged at the rear end thereof when seen in the direction of conveyance (4),
- wherein between each of the annular webs (48, 49, 50) and the calibrating mandrel (25), a gap (58a) is formed for squeezing together the external tube (37) and the internal tube (39),
- wherein between external nozzle (22) and internal nozzle (21), at least one gas duct (24) leads out of the extrusion head (8),
- wherein between internal nozzle (21) and calibrating mandrel (25), at least one additional gas duct (30) leads out of the extrusion head (8),
- wherein at least one pair of half-shells (12, 12') is provided with a socket recess (42), and
- wherein a transition surface (44) is formed at the first annular web (48) disposed between the socket recess (42) and the mould recess (32) adjacent thereto in the direction of conveyance (4), the transition surface (44) protruding in an obliquely outward direction relative to the central longitudinal axis (18),
**characterised in**
**that** the width a of the first annular web (48) defining a gap (58a) is greater than the width b of the gaps (58a) defined by the annular webs (54) arranged upstream thereof in the direction of conveyance (4).

9. Device according to claim 8, **characterised in**
**that** to the width a relative to the width b applies: a ≥ 1.5b.

10. Device according to claim 8 or 9, **characterised in**
**that** in the at least one annular web (48), a recess (50) is provided that connects the transition surface (44) to the adjacent annular mould recess (32).

11. Device according to one of claims 8 to 10, **characterised in**
**that** the ducts formed in the half-shells (12, 12') are configured as partial vacuum ducts (33).

## Revendications

1. Procédé de fabrication continue d'un tube d'assemblage (10), étant constitué d'un tube interne (39') lisse, et d'un tube externe (37'), muni de sommets d'ondulations (38), soudé au tube interne et étant doté d'un manchon tubulaire (41) et d'un axe longitudinal central (18), avec les étapes de procédé suivantes :
- une enveloppe externe (37) thermoplastique en matière synthétique est extrudée de manière concentrique par rapport à l'axe longitudinal central (18) dans un moule, se déplaçant dans une direction de transfert (4), constitué de demies coquilles (12, 12') appariées et situées très rapprochées l'une de l'autre dans la direction de transfert (4) ;
- l'enveloppe externe (37) est pourvue d'une ondulation, avec des sommets d'ondulations (38) et des creux d'ondulations (40, 40'), par l'intermédiaire d'une différence de pression agissant de l'intérieur vers l'extérieur dans des évidements de moule (32, 32') en forme d'anneaux des paires de demies coquilles (12, 12') formés entre des barres annulaires (48, 49, 54 );
- ensuite, rapidement, par rapport à la direction de transfert (4), dans l'enveloppe externe (37), une enveloppe interne (39) thermoplastique en matière synthétique est extrudée en face de l'enveloppe externe (37) de manière concentrique par rapport à l'axe longitudinal central (18) et en fonction d'un poinçon de calibrage (25) ;
- l'enveloppe interne (39) est soudée avec les creux d'ondulations (40, 40') de (58a) l'enveloppe externe (37) au niveau des fentes (58a) formées entre les barres annulaires (48, 49, 54) et le poinçon de calibrage (25) ;
- l'enveloppe externe (37) est élargie à des intervalles prédéfinis, moyennant l'apport d'une différence de pression agissant de l'intérieur vers l'extérieur, pour la formation d'un manchon tubulaire (41) ;
- l'enveloppe interne (39) est soumise depuis l'intérieur à une pression de gaz supérieure à la pression atmosphérique et est comprimée sur toute sa surface en position élargie contre la zone élargie de l'enveloppe externe (37) pour la finition du manchon tubulaire (41), et
- une section de transition (61), orientée obliquement vers l'extérieur par rapport à l'axe longitudinal central (18), faite à partir de l'enveloppe interne (39) et de l'enveloppe externe (37), est formée entre le manchon tubulaire (41) et le creux d'ondulation (40') directement voisin situé en amont dans la direction de transfert (4), où, lors de la formation de la section de transition (61), l'enveloppe interne (39) et comprimée contre l'enveloppe externe (37) déjà élargie,
**caractérisé en ce**
**que** l'enveloppe interne (39) et l'enveloppe externe (37) sont serrées l'une contre l'autre dans les fentes (58a) et
**que**, dans les zones de resserrement entre l'enveloppe interne (39) et l'enveloppe externe (37), la largeur a du premier creux d'ondulation (40') directement voisin de la section de transition (61) est supérieure à la largeur b des deuxièmes creux d'ondulations (40) situés immédiatement avant le premier creux d'ondulation (40') dans la direction de transfert (4).

2. Procédé selon la revendication 1, **caractérisé en ce**
**que** l'on ait, pour la largeur a du premier creux d'ondulation (40') par rapport à la largeur b des deuxièmes creux d'ondulations (40), a ≥ 1,5 b.

3. Procédé selon l'une des revendications 1 ou 2, **caractérisé en ce**
**que** l'enveloppe interne (39), dans la zone de la première ondulation (40') dans la fente (58a), est comprimée contre le poinçon de calibrage (25) pour assurer une étanchéité.

4. Procédé selon l'une des revendications 1 à 3, **caractérisé en ce**
**que** la section de transition (61) dans la zone du premier creux d'ondulation (40') est mise à l'air entre l'enveloppe interne (39) et l'enveloppe externe (37) au niveau d'un sommet d'ondulation (38) voisin.

5. Procédé selon l'une des revendications 1 à 4, **caractérisé en ce**
**que**, pour la création d'une différence de pression agissant de l'intérieur vers l'extérieur, un vide partiel est appliqué à l'enveloppe externe (37) à partir de l'extérieur.

6. Tuyau d'assemblage qui est fabriqué d'après le procédé selon l'une des revendications 1 à 5,
- avec un axe longitudinal central (18),
- avec un tuyau interne (39') à parois lisses s'étendant de manière concentrique par rapport à l'axe longitudinal central (18),
- avec un tuyau externe (37') ondulé qui présente
-- des sommets d'ondulations (38) et
-- des creux d'ondulations (40, 40'), entre les sommets d'ondulations (38), creux qui sont soudés au tuyau interne (39'),
- avec un manchon tubulaire (41) formé d'une pièce faisant corps avec le tuyau,
- avec une section de transition (61), conçue entre le manchon tubulaire (41) et le creux d'ondulation (40') directement voisin de celui-ci, s'élargissant obliquement vers l'extérieur par rapport à l'axe longitudinal central (18), section qui est formée
-- entre le tuyau externe (37') et le tuyau interne (39')
**caractérisé en ce**
**que** la largeur a du premier creux d'ondulation (40') soudé au tuyau intérieur (39') est supérieure à la largeur b des creux d'ondulations (40) voisins du premier creux d'ondulation (40').

7. Tuyau d'assemblage selon la revendication 6, **caractérisé en ce**
**que**, pour la largeur a du premier creux d'ondulation (40') par rapport à la largeur b des deuxièmes creux d'ondulations (40), on ait : a ≥ 1,5 b.

8. Dispositif destiné à l'exécution du procédé selon l'une des revendications 1 à 5 et à la fabrication d'un tuyau d'assemblage selon l'une des revendications 6 ou 7,
- dans lequel des demies coquilles (12, 12'), munies d'évidements de moule (32) de forme annulaire formés entre les barres annulaires (48, 49, 54), se complétant chaque fois par paires pour faire un moule avec un axe longitudinal central (18) dans un espace de moulage (16), sont disposées guidées sur un circuit dans une direction de transfert (4),
- dans lequel les évidements du moule (32) font suite à des canalisations (33) formées dans les demies coquilles (12, 12'),
- dans lequel une tête de pulvérisation (8) d'au moins une extrudeuse (1, 2) est disposée avant l'espace de moulage (16),
- dans lequel la tête de pulvérisation (8) est pourvue d'une buse externe (22), pour l'extrusion d'une enveloppe externe (37), et d'une buse interne (21), disposée postérieurement dans la direction de transfert (4), pour l'extrusion d'une enveloppe interne (39), et d'un poinçon de calibrage (25) à son extrémité située à l'arrière dans la direction de transfert (4),
- dans lequel, chaque fois, une fente (58a) est conçue entre les barres annulaires (48, 49, 54) et le poinçon de calibrage (25) pour la compression mutuelle de l'enveloppe externe (37) et de l'enveloppe interne (39) l'une contre l'autre,
- dans lequel au moins une canalisation de gaz (24) provenant de la tête de pulvérisation (8) débouche entre la buse externe (22) et la buse interne (21),
- dans lequel au moins une canalisation de gaz complémentaire (30) provenant de la tête de pulvérisation (8) débouche entre la buse interne (21) et le poinçon de calibrage (25),
- dans lequel au moins une paire de demies coquilles (12, 12') est pourvue d'un évidement de manchon (42) et
- dans lequel une surface de transition (44), orientée obliquement vers l'extérieur, est aménagée sur la première barre annulaire (48) par rapport à l'axe longitudinal central (18) se situant entre l'évidement de manchon (42) et l'évidement de moule (32) voisin dans la direction de transfert (4),
**caractérisé en ce**
**que** la largeur a de la première barre annulaire (48) délimitant une fente (58a) est supérieure à la largeur b de la fente (58a) délimitant les barres annulaires (54) précédentes dans la direction de transfert (4).

9. Dispositif selon la revendication 8, **caractérisé en ce**
**que**, pour la largeur a par rapport à la largeur b, on ait : a ≥ 1,5 b.

10. Dispositif selon les revendications 8 ou 9, **caractérisé en ce**
**que**, dans au moins une barre annulaire (48), un évidement (50) est prévu reliant la surface de transition (44) avec l'évidement de moule (32) de forme annulaire voisin.

11. Dispositif selon l'une des revendications 8 à 10, **caractérisé en ce**
**que** les canalisations aménagées dans les demies coquilles (12, 12') sont conçues comme des canalisations à vide partiel.
